# EUROPÄISCHE PATENTSCHRIFT

(11) **EP 2 547 593 B1**
(45) Veröffentlichungstag und Bekanntmachung des Hinweises auf die Patenterteilung: **18.03.2015**
(21) Anmeldenummer: 11701243.5
(22) Anmeldetag: 20.01.2011
(51) Int. Cl.: B65D 5/74, B65D 41/34, B65D 77/06, B29C 65/08, B29C 65/00, B65D 75/58, B29C 65/78

(54) **KUNSTSTOFFVERSCHLUSSVORRICHTUNG FÜR SCHLAUCHBEUTEL**
PLASTIC CLOSURE DEVICE FOR TUBULAR BAGS
DISPOSITIF DE FERMETURE EN PLASTIQUE POUR SACHET TUBULAIRE

(30) Priorität: 18.03.2010 DE 102010003019; 25.03.2010 DE 102010003268
(43) Veröffentlichungstag der Anmeldung: 23.01.2013
(73) Patentinhaber: Robert Bosch GmbH, 70442 Stuttgart (DE)
(72) Erfinder: DOCHERTY, Tom, 8200 Schaffhausen (CH); BARRON, Dan, 8200 Schaffhausen (CH)
(86) Internationale Anmeldenummer: PCT/EP2011/050778
(87) Internationale Veröffentlichungsnummer: WO 2011/113629

(56) Entgegenhaltungen:
- WO-A2-2007/149231
- JP-A- 2000 016 453
- JP-A- 2000 344 264

## Beschreibung

### Technisches Gebiet

Die vorliegende Erfindung beschreibt eine Kunststoffverschlussvorrichtung für Schlauchbeutel mit einem Unterteil, umfassend einen Ausguss und einen Flansch mit einer Flanschunterseite auf welcher eine Energieeinleitanordnung angeordnet ist, welche mit einer Kunststoffschicht mittels Ultraschallschweissen verbindbar ist.

### Stand der Technik

Kunststoffverschlussvorrichtungen für Schlauchbeutel, welche in der Fachsprache meist Pouches genannt werden, sind in unterschiedlichen Ausführungsformen bekannt.

Die Kunststoffverschlussvorrichtungen umfassen in der Regel einen direkt auf dem Schlauchbeutel befestigten Unterteil und eine auf dem Unterteil lösbar befestigbare Schraubkappe zum Verschliessen eines Ausgusses im Unterteil. Zur Befestigung der Kunststoffverschlussvorrichtung wird ein Flansch des Unterteiles auf dem Kunststofffolienmaterial des Schlauchbeutels unlösbar stoffschlüssig durch Ultraschallschweissen befestigt. Diese Schweissverbindung wird entweder direkt zwischen Flanschunterseite und der Kunststofffolie des Schlauchbeutels oder zwischen Flanschunterseite und einem eine gestanzte Öffnung in der Kunststofffolie des Schlauchbeutels schliessenden Kunststoffflicken ausgeführt.

Wie in den Abbildungen gemäss Stand der Technik verdeutlicht, führt das Ultraschallschweissen von Kunststoff im Bereich einer Fügezone des Flansches als Schweissteil mittels Sonotrode zur unlösbaren Verbindung des Flansches mit dem Schlauchbeutel oder dem Kunststoffflicken. Damit eine statische Fügekraft senkrecht auf den Flansch ausübbar ist, wird die Sonotrode gegen einen sogenannten Amboss mit einer definierten Fügekraft gepresst. Dieser Amboss ist in den Figuren nicht dargestellt.

Um eine ausreichend feste und flüssigkeitsdichte Verbindung zwischen der Unterseite des Flansches und dem Schlauchbeutel zu erreichen, wurde gemäss Stand der Technik auf der Unterseite des Flansches eine den Flansch vollständig umlaufende Energieeinleitrippe angeordnet. Gemäss der beiliegenden Figur wurde eine möglichst stumpfe mit einer planen Fläche in Richtung Schlauchbeutel weisende Energieeinleitrippe angeordnet, welche den zur optimalen Verschweissung notwendigen hohen statischen Fügekräften standhält und eine möglichst grosse Schweissoberfläche bildet. Die Energieeinleitrippe ist möglichst stumpf mit einer ausreichenden Dicke ausgeführt, sodass die statische Fügekraft auf eine möglichst grosse Fläche gleichmässig ausgeübt werden kann.

Aus der JP 2000016453 A ist eine Kunststoffverschlusseinrichtung für eine Papierverpackung bekannt, welche zwei konzentrisch zueinander angeordnete Energieeinleitungslippen aufweisen, die beide, im Querschnitt betrachtet, mit einer punktuellen Auflage versehen sind.

Zudem ist aus der WO 2007/149231 A2 für eine ähnliche Anwendung eine rundlich ausgestaltete Energieeinleitungslippe bekannt, die auf eine Halteplatte angeschweißt wird.

Die mechanischen Ultraschallschwingungen werden unter Druck auf den Flansch im Bereich der Energieeinleitrippe übertragen, wobei durch Molekular- und Grenzflächenreibung die zum Plastifizieren notwendige Wärme aufgrund einer Druckschwellbeanspruchung erzeugt wird und eine annähernd homogene Verschweissung der Oberfläche der Energieleitrippe in einem grossen Bereich resultiert, indem die stumpfe Energieleitrippe plastifiziert wird und eine grossflächige Verbindung liefert.

Das Verfahren gemäss Stand der Technik liefert zufriedenstellende Ergebnisse mit geringen Schweisszeiten, wobei aufgrund der Dicke der Energieeinleitrippe eine flüssigkeitsdichte grossflächige Verschweissung erreicht wird. Die Wirtschaftlichkeit des Befestigungsverfahrens ist aber verbesserungsfähig, da eine Gesamtleistung für den gesamten Verbindungsvorgang durch Ultraschallschweissen von mehreren tausend Watt erforderlich ist, um die angestrebten flüssigkeitsdichten unlösbaren Verbindungen zu erreichen. Die notwendige statische Fügekraft beträgt gemäss Stand der Technik bei Foliendicken von etwa 125 µm etwa 400 N und muss möglichst senkrecht auf die Flanschoberfläche ausgeübt werden. Damit sind derart starke stoffschlüssige Verbindungen zwischen Kunststoffverschlussvorrichtung und Kunststofffolie erreichbar, dass die Verbindung Zugkräften von etwa 0.2 bis 0.5 N/mm2 standhält.

Diese erreichbare Festigkeit ist je nach Anwendung und Belastung des Schlauchbeutels nicht ausreichend. Um eine optimale Plastifizierung der Energieeinleitrippen und damit eine ausreichend starke Verbindungen zu schaffen, wurde ein strukturierter Amboss eingesetzt. Der Nachteil eines strukturierten Ambosses ist die Möglichkeit, dass sich Bakterien einfach in der strukturierten Oberfläche verstecken können oder die Struktur des Ambosses die Kunststofffolie des Schlauchbeutels auch neben der Schweissstelle beschädigt.

### Darstellung der Erfindung

Die vorliegende Erfindung gemäß Anspruch 1 hat sich zur Aufgabe gestellt eine Kunststoffverschlussvorrichtung zu schaffen, welche im Vergleich zu aus dem Stand der Technik bekannten Kunststoffverschlussvorrichtungen mittels geringerer statischer Fügekräfte, geringerer Amplituden, geringerer Schweissenergien und damit insgesamt mittels geringerer Schweissleistungen auf den Schlauchbeuteln befestigbar ist. Eine kostengünstigere Befestigung jeder einzelnen Kunststoffverschlussvorrichtungen führt aufgrund der hohen Stückzahlen weltweit im Milliardenbereich pro Jahr zu enormen Einsparungen.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine perspektivische Ansicht einer zweiteiligen Kunststoffverschlussvorrichtung, während
- Figur 2: eine Ansicht auf die Unterseite des Unterteils mit der erfindungsgemässen Energieeinleitanordnung zeigt.
- Figur 3: zeigt einen Längsschnitt durch eine Kunststoffverschlussvorrichtung bei aufgesetzter Sonotrode, während
- Figur 4: eine Schnittansicht eines Ausschnittes des Flansches im Bereich der Fügezone zeigt.
- Figur 5a: zeigt einen diametralen Vertikalschnitt durch einen Unterteil, wobei der Flansch im äusseren Randbereich nach der äusseren Energieeinleitrippe abgerundet ausgeführt ist, während
- Figur 5b: einen Schnitt durch einen Unterteil entlang der Schnittlinie W-W gemäss Figur 2 dargestellt.

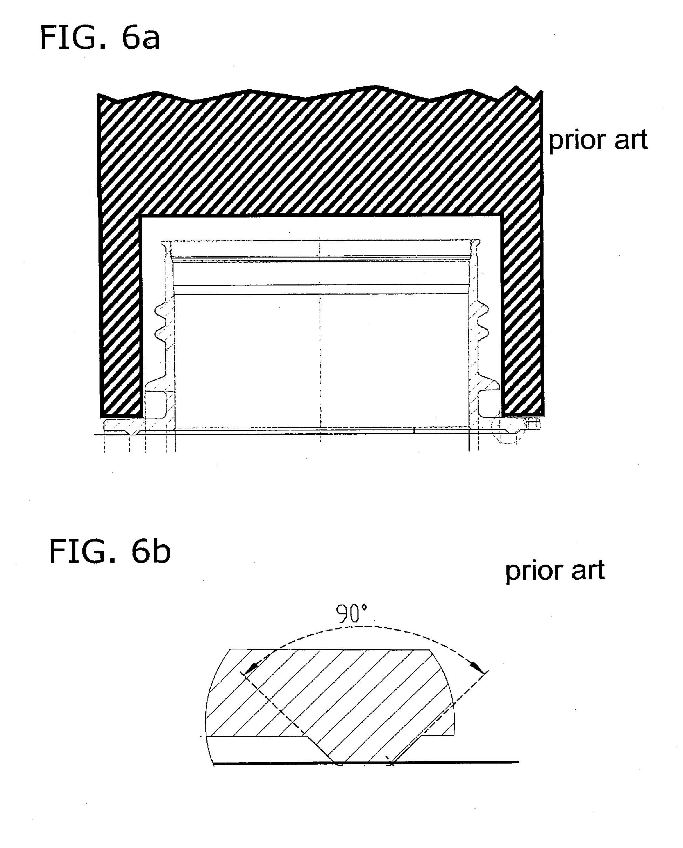

- Figuren 6a und 6b: zeigen eine Kunststoffverschlussvorrichtung gemäss Stand der Technik.

### Beschreibung

Die erfindungsgemässe Kunststoffverschlussvorrichtung ist insgesamt mit 1 bezeichnet und umfasst einen Unterteil 2 auf welchen eine Schraubkappe 3 dichtend lösbar befestigbar ist. Optional kann die Schraubkappe 3 durch ein Garantieband 4 am Unterteil 2 vor dem ersten Öffnen gesichert befestigt sein, sodass ein intaktes Garantieband 4 ein Zeichen für eine noch niemals geöffnete Kunststoffverschlussvorrichtung 1 ist. Der Unterteil 2 umfasst einen üblicherweise zylindrisch geformten Ausguss 22 an dessen Aussenfläche ein Aussengewinde 21 angeordnet ist und welcher von einem Flansch 20 begrenzt wird. Die Schraubkappe 3 weist ein nicht dargestelltes Innengewinde auf, welches mit dem Aussengewinde 21 in Wirkverbindung bringbar ist, womit die Kunststoffverschlussvorrichtung 1 flüssigkeitsdicht verschliessbar ist.

Der Unterteil 2 kann auch mit einer Scharnierkappe versehen sein oder einen im Unterteil 2 angeordneten Durchstosser aufweisen. Wesentlich ist nur, dass die Kunststoffverschlussvorrichtung 1 einen Unterteil 2 mit Ausguss 22 und einen peripheren Flansch 20 aufweist.

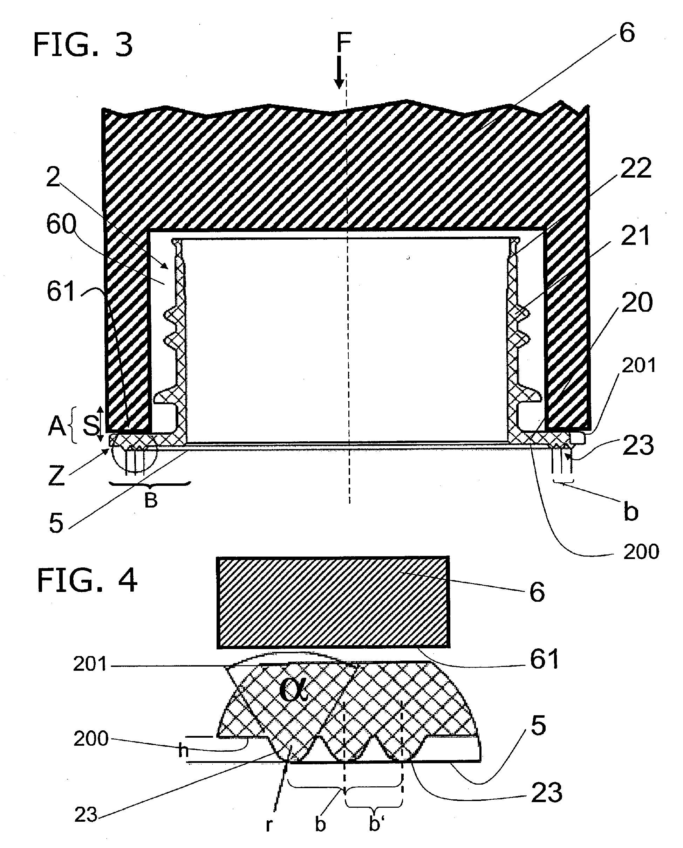

Mit dem Flansch 20 ist der Unterteil 2 direkt oder indirekt an einer Kunststofffolie 5 oder einem Kunststoffflicken, wie in Figur 3 detailliert gezeigt befestigbar, wobei die Kunststofffolie 5 einen Teil eines nicht dargestellten Schlauchbeutels darstellt. Der Schlauchbeutel kann je nach Verwendung mit unterschiedlichen Flüssigkeiten gefüllt sein, wobei die Flüssigkeit aus dem Ausguss 22 aus dem Schlauchbeutel nach dem Entfernen der Kappe entnehmbar ist. Die unterhalb des Ausgusses 22 notwendige Öffnung im Schlauchbeutel kann entweder durch eine entsprechende Vorrichtung beispielsweise dem oben genannten Durchstosser erzeugt werden oder direkt in der Kunststofffolie 5 des Schlauchbeutels angebracht sein.

Die der Kappe 3 beilspielsweise einer Schraubkappe 3 abgewandte Unterseite 200 des Flansches 20 weist eine Energieeinleitanordnung in Form einer Mehrzahl von Energieeinleitrippen 23 auf, welche den runden Flansch 20 umlaufen und von der Unterseite 200 des Flansches 20 wegragen. Die Energieeinleitrippen 23 sind hier bevorzugterweise mindestens annähernd parallel zueinander und von dem inneren Durchmesser des Flansches 20 bzw. des Ausgusses 22 so beabstandet angeordnet, dass diese ausserhalb des Bereiches der Kappe 3 liegen.

Eine unlösbare Verbindung des Unterteils 2 mit der Kunststofffolie 5 des Schlauchbeutels erfolgt mittels Ultraschallschweissen. Nach der Platzierung des Unterteils 2 mit der Unterseite 200 des Flansches 20 auf der Kunststofffolie 5 wird eine Sonotrode 6, welche üblicherweise rotationssymmetrisch ausgestaltet ist auf der den Energieeinleitrippen 23 abgewandten Flanschoberseite 201 positioniert. Die Sonotrode 6 ist vorteilhaft als Rotationssonotrode 6 ausgestaltet, welche einen Aufnahmeraum 60 aufweist in welchen der Unterteil 2 gegebenenfalls mit aufgesetzter Kappe 3 aufnehmbar ist, während der Auflagerand 61 der Sonotrode 6 direkten Kontakt zur Flanschoberseite 201 hat. Die Ultraschallenergie wird in den Bereich der Fügezone Z mindestens annähernd senkrecht zur Flanschoberseite 201 eingeleitet, wobei die Schwingungsrichtung S der Sonotrode 6 etwa longitudinal etwa parallel zur Längsachse des Unterteils 2 der Kunststoffverschlussvorrichtung 1 ausgeführt wird. Mit einer Amplitude A werden hochfrequente mechanische Schwingungen, durch einen angeschlossenen Generator erzeugt, ausgeführt, welche der Arbeitsfrequenz der Sonotrode 6 entsprechen.

Während der Einleitung der mechanischen Ultraschallschwingungen wird eine statische Fügekraft F mindestens annähernd senkrecht auf die Flanschoberseite 201 während einer Schweisszeit ausgeübt. Die statische Fügekraft F weist etwa in die Schwingungsrichtung S. Die Sonotrode 6 presst den Unterteil 2 unter der statischen Fügekraft F gegen einen nicht dargestellten Amboss.

Durch die hochfrequente Ultraschallschwingung wird bzw. werden die Berührungsstellen zwischen Kunststofffolie 5 und Flansch 20 erwärmt, wodurch die stoffschlüssige Verbindung zwischen Unterteil 2 und Schlauchbeutel bzw. Kunststofffolie 5 resultiert. Die Schweissverbindung kann entweder direkt zwischen Flanschunterseite 200 und der Kunststofffolie 5 des Schlauchbeutels oder zwischen der Flanschunterseite 200 und einem Kunststoffflicken im Inneren des Schlauchbeutels unterhalb der Kunststofffolie 5 des Schlauchbeutels ausgeführt werden, wobei die Ultraschallschwingung entsprechend Energie in die Energieeinleitrippen 23 einleitet.

Auch nach dem eigentlichen Schweissvorgang bleibt die Fügekraft F für eine Haltezeit bestehen, wobei der Flansch 20 und die Kunststofffolie 5 unter Druck abkühlt.

Versuche haben gezeigt, dass die Mehrzahl der Energieeinleitrippen 23 auf einer Breite b auf der Unterseite 200 anzuordnen sind, wobei die Flanschoberseite 201 die Breite b überspannend während des Schweissvorganges vollständig von der Auflagefläche, hier dem Rand 61 der Sonotrode 6 überdeckt sein sollte, um eine optimale Energieeinleitung zu gewährleisten. Die Energieeinleitrippen 23 sind annähernd parallel in einem Abstand b' anzuordnen, wobei die Energieeinleitrippen 23 und die Flanschunterseite 200 im Abstand einer Höhe h von der Kunststofffolie 5 beabstandet sind.

Versuche haben gezeigt, dass zwei oder mehr, bevorzugt drei Energieeinleitrippen 23 auf der Breite b zu optimalen flüssigkeitsdichten Schweissverbindungen führen. Im Vergleich zu Verfahren gemäss Stand der Technik konnte die aufzuwendende statische Fügekraft F verringert und die gesamt aufgewandte Leistung verringert werden, wobei qualitativ gleichwertige Schweissverbindungen erreichbar sind.

Die Höhe h ist bestimmt durch den Abstand zwischen Flanschunterseite 200 und dem Erhebungsmaximum der Energieeinleitrippen 23 und damit von der anzuschweissenden Kunststofffolie 5. Es wurden Höhen h von 0.2 bis 0.4 mm gewählt. Die im Querschnitt zu ihrem Ende gerundet ausgestalteten Energieeinleitrippen 23 weisen einen Radius r von 0.1 bis 0.3 mm auf. Die Erhebungsmaxima der Energieeinleitrippen 23 in Form von Kuppen führen zu im Querschnitt gesehen zu etwa punktuellen Auflagen auf der Kunststofffolie 5. Einen Winkel α zwischen 50° und 70°, bevorzugt von 60° schliessen die Flanken der Energieeinleitrippen 23 ein. Die Kuppen der Energieeinleitrippen 23 liegen unterhalb der Flanschunterseite 200 auf kreisförmigen Auflagelinien bzw. schmalen Auflageflächen auf.

Der Abstand b' benachbarter Energieeinleitrippen 23 der Energieeinleitanordnung ist je nach Flanschbreite B und Breite des Auflagerandes 61 der Sonotrode 6 zwischen 1 mm und 1.5 mm gewählt, sodass im Fall von drei parallelen und sich damit nicht schneidenden Energieeinleitrippen 23 die Breite b der Energieeinleitanordnung etwa 2.5 bis 2.7 mm beträgt. Da Gewindeflanken des Aussengewindes 21 teilweise über die Flanschoberseite 201 ragen, kann der Auflagerand 61 der Sonotrode 6 üblicherweise nicht anliegend am Ausguss auf die Flanschoberseite 201 aufgesetzt werden. Es ist aber wichtig, dass der Rand 61 auf der Flanschoberseite 201, der Energieeinleitanordnung auf der Flanschunterseite 200 gegenüberliegend, möglichst eben aufliegt, wobei die Ultraschallenergie optimal von der Sonotrode 6 in den Flansch 20 und die Energieeinleitrippen 23 einleitbar ist. Um einen möglichst grossen Bereich der Energieübertragung auf den Flansch 20 zu erreichen, muss die Sonotrode 6 möglichst nahe an die Gewindeflanken des Aussengewindes 21 vorbeigeführt werden, sodass eine maximale Kontaktfläche auf der Flanschoberseite 201 bedeckt wird.

### Beispiel

In Versuchsreihen welche das Schweissverfahren gemäss Stand der Technik bei Verwendung nur einer Energieeinleitrippe mit der Verwendung einer Kunststoffverschlussvorrichtung 1 mit einer Mehrzahl von Energieeinleitrippen verglichen haben, konnte eine deutliche Verringerung der notwendigen statischen Fügekraft F und vor allem der maximal notwendigen Leistung gemessen werden. Dabei zeigten sich gute Ergebnisse bei der Verwendung von Energieeinleitanordnungen umfassend zwei und drei Energieeinleitrippen 23, wobei die besten Ergebnisse mit drei Energieeinleitrippen 23 erreicht werden konnten.

Verglichen wird die Schweissbefestigung eines Unterteils einer Kunststoffverschlussvorrichtung gemäss Stand der Technik mit einem Unterteil 2 mit spezieller Energieeinleitanordnung mit drei Energieeinleitrippen 23 auf identischen Kunststofffolien 5 mit jeweils einer Dicke von 5 mil, was einer Dicke von (1 mil = 25,4 µm) etwa 125 µm entspricht. Die Flächen der Flanschunterseiten 200 und Flanschoberseiten 201 des bekannten Unterteils sowie des neuartigen Unterteils 2 waren identisch, sodass die Ergebnisse vergleichbar sind.

Bei mehr als drei Energieeinleitrippen müssen diese in der Dicke reduziert werden, um den Energie- und Leistungsbedarf nicht weiter ansteigen zu lassen. Folglich würde aber das Volumen des zur Verschweissung erforderlichen Materials zu gering und die Stärke der Schweissverbindung würde reduziert.

Tabelle 1 zeigt die direkte Gegenüberstellung der Verfahrensparameter zur Befestigung des bekannten Unterteils bzw. des neuartigen Unterteils 2.

**Tabelle 1:**

| | prior art | Erfindung |
|---|---|---|
| Schweisszeit | 0.160 s | 0.200 s |
| Haltezeit | 0.100 s | 0.100 s |
| Amplitude A | 95% | 90% |
| statische Füqekraft F | 400 N | 250 N |
| Enerigie max | 120 J | 105 J |
| Leistung max | 3900 W | 549 W |

Neben einer beinahen Halbierung der notwendigen statischen Fügekraft F und einer Reduktion der notwendigen eingespeisten Ultraschallenergie bei annähernd gleicher Amplitude A konnte die für den gesamten Ultraschallschweissvorgang aufzuwendende Leistung deutlich verringert werden.

Die Tabelle 2 zeigt eine Gegenüberstellung der Zugkraft zur Entfernung einer aufgeschweissten Kunststoffverschlussvorrichtungen gemäss Stand der Technik und einer erfindungsgemässen Kunststoffverschlussvorrichtung 1 bzw. des Unterteils 2 unter Verwendung von drei Energieeinleitrippen 23. Die oben beschriebenen Unterteile mit identischen Flächen der Flanschunterseiten wurden nach Befestigung auf einer identischen Kunststofffolie 5 nach einiger Zeit mit den unten angegebenen Zugkräften unter identischen Bedingungen belastet.

**Tabelle 2:**

| | prior art | Erfindung |
|---|---|---|
| Zugkraft (N) | 92.00 | 144.33 |
| Zugkraft/Fläche (N/mm2) | 0.43 | 0.67 |

Es ist deutlich erkennbar, dass die notwendige Zugkraft bzw. Zugkraft pro Fläche zur Ablösung der Unterteile bei dem mit der neuen Energieeinleitanordnung versehenen Unterteils 2 deutlich über dem Vergleichswert des klassischen Unterteils liegt.

Wie oben erläutert wurde, konnte die vorliegende Gestaltung des Unterteils 2 zu einer Verbesserung der bisher bekannten Schweissverfahren führen, sodass eine energieeffiziente stoffschlüssige Verbindung von Unterteilen 2 von Kunststoffverschlussvorrichtungen 1 mit Kunststofffolien 5 von Schlauchbeuteln erreicht werden kann, welche darüber hinaus noch eine stärkere und widerstandsfähigere Verbindung zwischen Unterteil 2 und Schlauchbeutel gewährleistet.

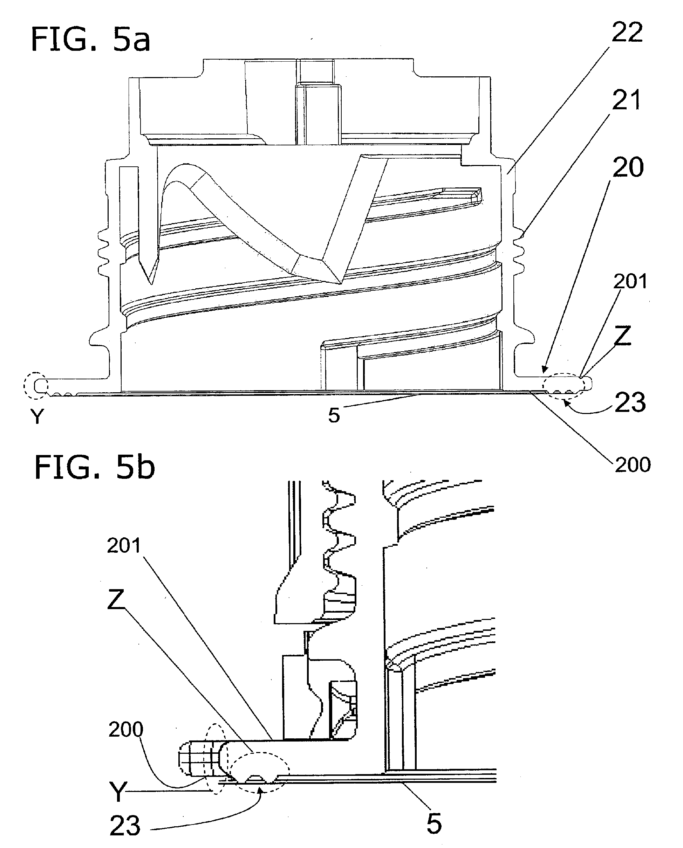

Zur Erhöhung der Schweissverbindung sollte vermieden werden, dass die Unterseite 200 im äusseren Randbereich Y des Flansches 20 mit der Kunststofffolie 5 während des Schweissens in Kontakt kommt. Um zu verhindern, dass ein Teil der Energie während des Schweissvorganges ausserhalb der gewünschten Fügezone Z in die Kunststofffolie 5 eingeleitet wird, wird die Auflage der Unterseite im Randbereich Y des Flansches 20 dadurch vermieden, dass die Unterseite 200 nach der äusseren Energieleitrippe 23 in Richtung Flanschoberseite 201 geführt wird. Dies ist in Figur 5a verdeutlicht. Der stark gerundete Randbereich Y des Flansches 20 zeichnet sich dadurch aus, dass die Unterseite 200 in die Flanschoberseite 201 übergeht, wobei der Abstand der Unterseite 200 zur Kunststofffolie 5 nur direkt an der äusseren Energieleitrippe 23 der Höhe h der Energieleitrippe 23 entspricht. Durch die von der Kunststofffolie 5 weg gekrümmte Unterseite 200 im Randbereich Y, bleibt die Schweissenergie auf die Fügezone Z beschränkt und somit erfolgt kein Ankleben der Kunststofffolie 5 unterhalb des Randbereiches Y des Flansches 20. Durch diese Konzentration der Schweissenergie, kann die notwendige Energie zusätzlich reduziert werden.

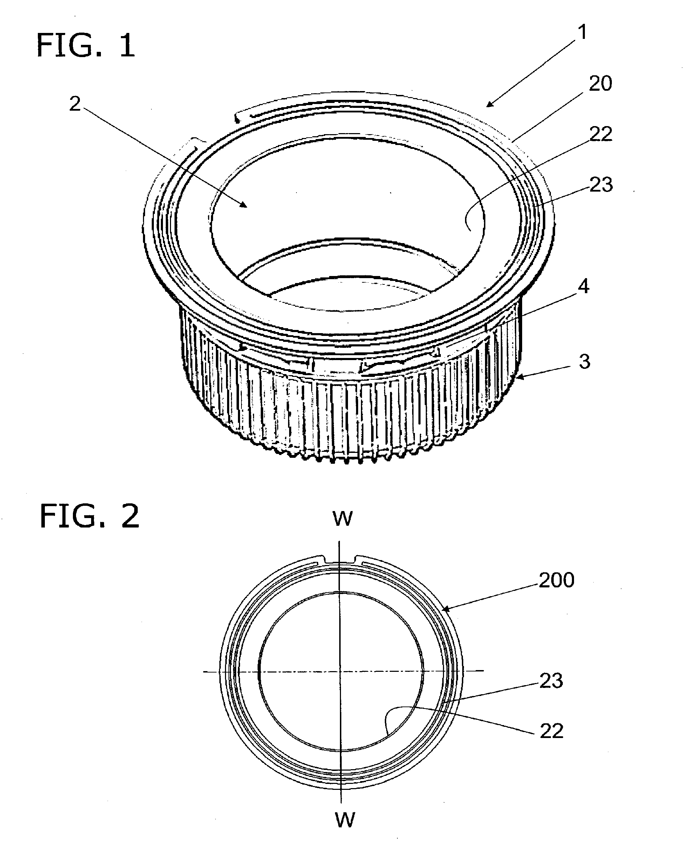

In Figur 5b wird ein Schnitt durch den Flansch 20 entlang der Schnittlinie W-W gemäss Figur 2 dargestellt. Auch hier ist die Unterseite 200 nach der äusseren, in diesem Falle der zweiten Energieeinleitrippe 23 stark von der Kunststofffolie 5 weg in Richtung der Flanschoberseite 201 gekrümmt, wodurch der resultierende Randbereich Y nach der äusseren Energieeinleitrippe 23 stark gekrümmt und von der Kunststofffolie 5 beabstandet ist. Damit ist die der Kunststofffolie 5 gegenüberliegende Fläche der Flanschunterseite 200 minimiert, womit in diesem Randbereich Y nahezu keine Schweissung durchgeführt wird. Die eingeleitete Energie ist somit auf die Energieeinleitrippen 23 konzentriert.

## Patentansprüche

1. Kunststoffverschlussvorrichtung für Schlauchbeutel mit einem Unterteil (2), umfassend einen Ausguss (22) und einen Flansch (20) mit einer Flanschunterseite (200) auf welcher eine Energieeinleitanordnung angeordnet ist, welche mit einer Kunststoffschicht mittels Ultraschallschweißen verbindbar ist,
wobei die Energieeinleitanordnung mindestens zwei, bevorzugt drei mindestens annähernd zueinander parallel entlang der Flanschunterseite (200) verlaufende Energieeinleitrippen (23) umfasst, welche jeweils um eine identische Höhe (h) von der Flanschunterseite (200) wegragen, wobei die Erhebungsmaxima der Energieleitrippen (23) eine in etwa punktuelle Auflage bilden,
**dadurch gekennzeichnet, dass**
die Energieleitrippen (23) an ihren umlaufenden Kuppen mit einem Radius (r) von 0.1 bis 0.3 mm im Querschnitt gerundet ausgestaltet sind,

2. Kunststoffverschlussvorrichtung (1) gemäß Anspruch 1, **wobei** die Energieeinleitrippen (23) auf einer Breite (b) von etwa 2.5 bis 2.7 mm angeordnet sind.

3. Kunststoffverschlussvorrichtung (1) gemäß Anspruch 1, **wobei** die Flanschoberseite (201) oberhalb des Bereiches in dem die Energieeinleitrippen (23) angeordnet sind (b) frei zugänglich ist.

4. Kunststoffverschlussvorrichtung (1) gemäß Anspruch 1, **wobei** jeweils benachbarte Energieeinleitrippen (23) in einem Abstand (b') von 1 bis 1.5 mm, bevorzugt von 1.25 mm, zueinander angeordnet sind.

5. Kunststoffverschlussvorrichtung (1) gemäß Anspruch 1, **wobei** die im Querschnitt ersichtlichen Flanken der Energieeinleitrippen (23) einen Winkel (α) von 50° bis 70°, bevorzugt von 60°, einschließen.

6. Kunststoffverschlussvorrichtung (1) gemäß Anspruch 1, **wobei** die Höhe (h) der Energieeinleitrippen (23) zwischen 0.2 bis 0.4 mm, bevorzugt 0.3 mm beträgt.

7. Kunststoffverschlussvorrichtung (1) gemäß Anspruch 1, **wobei** die Unterseite (200) in einem Randbereich (Y) an die äußere Energieeinleitrippe (23) anschließend in Richtung Flanschoberseite (201) gekrümmt ist.

## Claims

1. Plastic closure device for tubular bags, having a bottom part (2), comprising a discharge outlet (22) and a flange (20) having a flange bottom side (200) on which there is disposed an energy-introducing arrangement which can be connected to a plastic layer by means of ultrasonic welding,
wherein the energy-introducing arrangement comprises at least two, preferably three, energy-introducing ribs (23), which run at least approximately parallel to one another along the flange bottom side (200) and respectively project away from the flange bottom side (200) by an identical height (h), wherein the elevation maxima of the energy-introducing ribs (23) form a roughly punctiform bearing surface, the energy-introducing ribs (23), at their circumferential domes, are configured rounded with a radius (r) of 0.1 to 0.3 mm in cross section.

2. Plastic closure device (1) according to Claim 1, **wherein** the energy-introducing ribs (23) are arranged over a width (b) of about 2.5 to 2.7 mm.

3. Plastic closure device (1) according to Claim 1, **wherein** the flange top side (201), above the region in which the energy-introducing ribs (23) are arranged (b), is freely accessible.

4. Plastic closure device (1) according to Claim 1, **wherein** respectively adjacent energy-introducing ribs (23) are arranged at a distance apart (b') of 1 to 1.5 mm, preferably of 1.25 mm.

5. Plastic closure device (1) according to Claim 1, **wherein** the flanks of the energy-introducing ribs (23), which flanks are visible in cross section, enclose an angle (α) of 50° to 70°, preferably of 60°.

6. Plastic closure device (1) according to Claim 1, **wherein** the height (h) of the energy-introducing ribs (23) is between 0.2 and 0.4 mm, preferably 0.3 mm.

7. Plastic closure device (1) according to Claim 1, **wherein** the bottom side (200), in a marginal region (Y) adjoining the outer energy-introducing rib (23), is curved in the direction of the flange top side (201).

## Revendications

1. Dispositif de fermeture en plastique pour sachet tubulaire, comprenant une partie inférieure (2), comportant un bec verseur (22) et une bride (20) présentant un côté inférieur de bride (200) sur lequel est disposé un ensemble d'introduction d'énergie, lequel peut être connecté à une couche de plastique au moyen d'un soudage par ultrasons, l'ensemble d'introduction d'énergie comportant au moins deux, de préférence trois, nervures d'introduction d'énergie (23) s'étendant au moins approximativement parallèlement les unes aux autres le long du côté inférieur de bride (200), lesquelles font respectivement saillie d'une hauteur identique (h) à partir du côté inférieur de bride (200), les maxima d'élévation des nervures d'introduction d'énergie (23) formant un appui approximativement ponctuel,
**caractérisé en ce que**
les nervures d'introduction d'énergie (23) sont configurées de manière arrondie en section transversale avec un rayon (r) de 0,1 à 0,3 mm.

2. Dispositif de fermeture en plastique (1) selon la revendication 1, les nervures d'introduction d'énergie (23) étant disposées sur une largeur (b) d'approximativement 2,5 à 2,7 mm.

3. Dispositif de fermeture en plastique (1) selon la revendication 1, le côté supérieur de bride (201) étant librement accessible au-dessus de la région dans laquelle les nervures d'introduction d'énergie (23) sont disposées (b).

4. Dispositif de fermeture en plastique (1) selon la revendication 1, des nervures d'introduction d'énergie (23) adjacentes respectives étant disposées à une distance (b') de 1 à 1,5 mm, de préférence de 1,25 mm, l'une de l'autre.

5. Dispositif de fermeture en plastique (1) selon la revendication 1, les flancs, visibles en section transversale, des nervures d'introduction d'énergie (23) formant un angle (α) de 50° à 70°, de préférence de 60°.

6. Dispositif de fermeture en plastique (1) selon la revendication 1, la hauteur (h) des nervures d'introduction d'énergie (23) valant entre 0,2 et 0,4 mm, de préférence 0,3 mm.

7. Dispositif de fermeture en plastique (1) selon la revendication 1, le côté inférieur (200), dans une région de bord (Y) dans le prolongement de la nervure d'introduction d'énergie extérieure (23), étant courbé en direction du côté supérieur de bride (201).
